# NOUVEAU FASCICULE DE BREVET EUROPEEN

(11) **EP 1 523 630 B2**
(45) Date de publication et mention de la décision concernant l'opposition: **10.08.2011**
(45) Mention de la délivrance du brevet: 15.02.2006
(21) Numéro de dépôt: 03769538.4
(22) Date de dépôt: 29.08.2003
(51) Int. Cl.: F16H 25/22

(54) **ACTIONNEUR MECANIQUE INCLUANT UN ECROU A CAMES HELICOIDALES**
SCHRAUBENFÖRMIGE LINEARANTRIEBSEINRICHTUNG MIT NOCKEN
MECHANICAL ACTUATOR INCLUDING A HELICAL-CAM NUT

(30) Priorité: 29.08.2002 FR 0210715
(43) Date de publication de la demande: 20.04.2005
(73) Titulaire: BUBENDORFF Société Anonyme, 68220 Attenschwiller (FR); Innovation Technologie Conseil ITC, 31520 Ramonville-Saint-Agne (FR)
(72) Inventeur: GAECHTER, Jean-Pierre, F-31320 Rebigue (FR)
(74) Mandataire: Rhein, Alain
(86) Numéro de dépôt international: PCT/FR2003/002607
(87) Numéro de publication internationale: WO 2004/020871

(56) Documents cités:
- DE-A1- 3 105 494
- DE-A1- 10 028 968
- FR-A- 1 264 194
- FR-A- 2 328 138
- GB-A- 526 735
- GB-A- 686 319
- GB-A- 813 741
- GB-A- 1 117 353
- JP-A- 8 198 595
- US-A- 2 756 609
- US-A- 2 756 609
- US-A- 3 009 367
- US-A- 3 572 136
- US-A- 4 173 907
- US-A- 4 366 723
- US-A- 5 943 910
- US-A- 5 943 910
- US-B1- 6 393 930

## Description

L'invention concerne le domaine des actionneurs linéaires mécaniques, et notamment des actionneurs mécaniques entraînés par un moteur électrique (actionneurs électromécaniques).

Le développement des actionneurs linéaires électromécaniques est lié aux besoins dans des domaines tels que la robotique et la domotique. En effet, dans ces domaines les vérins électromécaniques concurrencent les vérins classiques, hydrauliques ou pneumatiques, car ils sont plus facilement commandables, plus précis et ne nécessitent pas de source de fluide externe.

Ces actionneurs électromécaniques comprennent généralement une vis à billes sur laquelle est monté un écrou. L'écrou est entraîné en rotation par un motoréducteur extérieur. La rotation de l'écrou entraîne la translation de la vis.

L'inconvénient de ces actionneurs électromécaniques est qu'ils sont relativement encombrants.

En outre, le coût des vis à billes étant généralement élevé vis-à-vis des autres pièces mécaniques qu'ils contiennent, ces actionneurs restent relativement coûteux.

On connaît, en particulier par le document GB-686.319, un système de vis écrou à billes dont la vis se présente sous forme d'un corps cylindrique tubulaire comportant, intérieurement, des pistes de roulement hélicoïdales pour le guidage de billes, sachant que dans ce corps tubulaire est monté un écrou comportant des chemins de roulement desdites billes, chaque chemin de roulement comprenant une portion hélicoïdale s'étendant autour de l'écrou selon un angle inférieur à 360 degrés et une portion élargie joignant les extrémités de la portion hélicoïdale et constituant une zone de recirculation des billes.

Un but de l'invention est de proposer une structure d'actionneur compacte et dont la réalisation serait simplifiée par rapport aux structures d'actionneurs de l'art antérieur.

A cet effet, l'invention concerne un actionneur selon l'objet de la revendication indépendante 1.

Le fait que l'actionneur comprend un écrou interne permet de positionner le moteur des moyens d'entraînement de l'écrou à l'intérieur d'un deuxième corps. En outre, le chemin de re-circulation peut être intégré à l'écrou. Cette disposition conduit à une structure compacte d'actionneur et dont l'aspect extérieur s'apparente aux actionneurs pneumatiques. En particulier, l'actionneur ne laisse pas apparaître de dispositif motoréducteur externe. L'actionneur proposé est donc particulièrement compact relativement à l'effort qu'il est capable de générer.

En outre, l'utilisation d'une structure tubulaire confère à l'actionneur une meilleure résistance au flambage qu'un actionneur classique présentant un écrou extérieur monté autour d'une vis intérieure.

Dans une mise en oeuvre de l'invention, les billes sont montées entre le chemin et le premier corps tubulaire avec une précontrainte radiale déterminée.

Le fait que les billes soient montées avec précontrainte permet d'obtenir un actionneur linéaire capable de transmettre des efforts importants par rapport à ses dimensions.

Selon l'invention, le chemin de roulement comprend une portion hélicoïdale s'étendant autour de l'écrou selon un angle inférieur à 360 degrés et une portion élargie joignant les extrémités adjacentes de la portion hélicoïdale, ladite zone élargie constituant une zone de re-circulation des billes.

Ceci présente l'avantage de ne pas nécessiter la formation d'un chemin de re-circulation interne dans l'écrou. Les billes sont automatiquement « recyclées » dès qu'elles atteignent la zone de re-circulation.

En outre, la surface intérieure du premier corps tubulaire présente des pistes de roulement hélicoïdales ayant pour fonction de guider des billes. Les zones élargies de re-circulation permettent le passage des billes d'une piste de roulement à une piste adjacente par-dessus un bord de piste lors de leur recirculation.

L'écrou comprend plusieurs éléments alignés, de forme générale cylindrique, présentant chacun au moins un chanfrein formant une surface de came hélicoïdale, les chanfreins formant deux à deux des chemins de roulement hélicoïdaux dans lesquels sont positionnées des billes. Chaque élément est formé à partir d'une pièce cylindrique de section droite dont l'une des arêtes circulaires est chanfreinée pour former ladite surface de came hélicoïdale inclinée par rapport à l'axe de la pièce cylindrique, les extrémités de la surface hélicoïdale se rejoignant par une surface de décrochement de forme générale de préférence conique.

Chaque élément de l'écrou est formé à partir d'une pièce cylindrique de section droite c'est-à-dire que la pièce cylindrique est limitée par deux plans parallèles orthogonaux à son axe de révolution. Il s'agit d'une forme simple. La forme des éléments est par conséquent plus facile à générer que dans l'art antérieur.

Selon la technique de réalisation du chanfrein, la surface de décrochement peut également présenter une forme générale convexe, concave, plane, cylindrique, plane à raccordement conique ou à raccordement cylindrique ou autre.

Avantageusement, chaque surface de came hélicoïdale forme un décrochement et deux éléments sont positionnés l'un par rapport à l'autre de sorte que leurs décrochements se trouvent l'un en face de l'autre, lesdits décrochements formant la zone de re-circulation des billes.

Avantageusement, la précontrainte exercée sur les billes est engendrée par serrage des éléments entre eux.

A cet effet, l'actionneur peut comprendre un écrou de réglage des éléments pour régler la précontrainte exercée sur les billes.

L'effort pouvant être fourni par l'actionneur dépend directement de la précontrainte appliquée aux billes et réglée par l'écrou de réglage.

Avantageusement, l'actionneur comprend des moyens élastiques interposés entre l'écrou de réglage et les éléments de l'écrou par l'intermédiaire desquels l'écrou de réglage exerce une précontrainte sur les éléments.

De préférence, le moteur est un moteur électrique ou hydraulique.

Le procédé d'obtention de l'élément d'écrou est simple à mettre en oeuvre avec des moyens d'usinage traditionnels.

D'autres caractéristiques et avantages ressortiront encore de la description qui suit, laquelle est purement illustrative et non limitative et doit être lue en regard des figures annexées parmi lesquelles:
- la figure 1 représente en coupe longitudinale, un exemple de structure d'actionneur, dans laquelle les moyens d'entraînement comprennent un moteur électrique, étant précisé que ce mode de réalisation correspondant à cette figure 1 ne fait pas partie des modes de réalisation revendiqués et est seulement décrit ci-après à titre informatif ;
- la figure 2 est un schéma représentatif d'une bille précontrainte,
- la figure 3 est une vue en perspective d'une came constitutive de l'écrou,
- la figure 4 est un schéma représentatif d'une étape de génération d'une surface de came hélicoïdale,
- la figure 5 est un schéma représentatif du positionnement de deux cames l'une par rapport à l'autre sur l'arbre d'entraînement de l'actionneur,
- la figure 6 représente schématiquement le positionnement de deux couples de cames l'un par rapport à l'autre, dans lequel les zones de recirculation des billes sont réparties régulièrement autour de l'arbre d'entraînement,
- la figure 7 représente un exemple de surface intérieure du corps tubulaire présentant des pistes de roulement formées par un fil enroulé en hélice,
- les figures 8 et 9 représentent schématiquement des pistes de roulement formés par un premier fil enroulé et un deuxième fil intermédiaire disposé entre les spires du premier fil,
- la figure 10 représente schématiquement des pistes de-roulement formées par déformation plastique d'un tube interne disposé dans le corps tubulaire,
- la figure 11 représente schématiquement une étape de soudure du tube interne dans le corps tubulaire,
- la figure 12 représente en coupe longitudinale, une structure d'actionneur de type télescopique,
- la figure 13 représente l'actionneur de la figure 12 en position déployée,
- la figure 14 représente schématiquement le positionnement d'une bille en appui entre l'écrou et une piste de roulement,
- la figure 15 est une vue en coupe et en perspective des billes lorsqu'elles parviennent dans une zone de re-circulation,
- la figure 16 est un schéma représentatif du positionnement de deux cames l'une par rapport à l'autre.

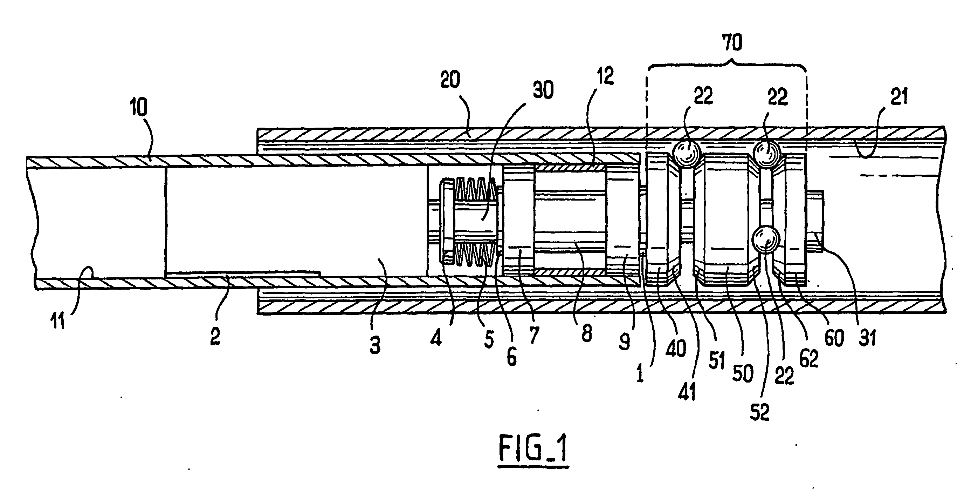

Sur la figure 1, l'actionneur linéaire comprend un tube intérieur 10 et un tube extérieur 20 dont le diamètre est supérieur au diamètre du tube intérieur 10. Le tube intérieur 10 s'étend en partie dans le tube extérieur. Les deux tubes 10 et 20 sont bloqués en rotation l'un par rapport à l'autre et sont aptes à être entraînés pour coulisser l'un par rapport à l'autre selon leur direction longitudinale.

A cet effet, l'actionneur comprend un mécanisme d'entraînement comprenant un arbre d'entraînement 30 s'étendant selon l'axe longitudinal des tubes 10 et 20. L'arbre 30 est entraîné en rotation par un moteur électrique 2 fixé à l'une de ses extrémités et positionné dans le tube intérieur 10. Le moteur 2 et l'arbre 30 sont maintenus dans le tube intérieur 10 par l'intermédiaire d'un support cylindrique 3 fixé au tube intérieur.

Par ailleurs, l'arbre 30 est guidé dans le tube intérieur 10 par l'intermédiaire de deux roulements à billes 7 et 9 dont la bague intérieure est montée sur l'arbre 30 et la bague extérieure vient en appui sur la surface intérieure 11 du tube intérieure 10. Les deux roulements 7 et 9 sont maintenus à distance par une entretoise 8 sous la forme d'un manchon cylindrique venant en appui sur les bagues intérieures des roulements 7 et 9 ainsi que par l'intermédiaire d'une entretoise 12 goupillées dans le tube intérieur 10 et venant en appui sur les bagues extérieures des roulements 7 et 9. La reprise des efforts axiaux exercés sur les roulements peut se faire soit par l'intermédiaire de l'entretoise 12, soit par tout autre moyen équivalent (par exemple des circlips bloquant le roulement).

L'arbre 30 supporte en outre un écrou de réglage 4, un ensemble de rondelles Belleville 5, une première rondelle de serrage 6 positionnées entre le support 3 du moteur et le roulement 7. La rondelle de serrage 6 prend appui sur la cage interne du roulement 7. L'arbre 30 supporte également une deuxième rondelle de serrage 1 et un écrou à billes 70, positionnés entre le roulement 9 et un élément de butée 31 en extrémité de l'arbre 30.

L'écrou 70 est constitué d'une succession de cames 40, 50 et 60 de formes générales cylindriques montées alignées sur l'arbre 30 et bloquées en rotation par rapport à l'arbre par une clavette. Les cames 40, 50, 60 présentent des chanfreins hélicoïdaux 41, 51 et 52, 62, orientés à 45° par rapport à l'axe de l'arbre 30. Ces chanfreins 41, 51, 52, 62 forment deux à deux des chemins de roulement hélicoïdaux dans lesquels sont positionnés des billes 22. Les billes 22 sont en contact d'une part avec deux surfaces de chanfreins opposés, 41 et 51, ou 52 et 62 et d'autre part avec la surface intérieure lisse 21 du tube extérieur 20. L'effort radial appliqué sur les billes 22 est réglé par serrage de l'écrou 4. L'écrou de réglage 4 applique un effort de compression sur les rondelles Belleville 5 selon la direction longitudinale de l'arbre 30. Cet effort de compression est transmis aux cames 40, 50, 60 par l'intermédiaire la rondelle de serrage 6 qui transmet et répartit l'effort de serrage sur les cages internes des roulements 7 et 9 et sur la rondelle de serrage 1. Les cames 40, 50, 60 se trouvent donc en compression entre la rondelle de serrage 1, les billes 22 et l'élément de butée 31 en extrémité de l'arbre 30. Par serrage des cames 40, 50, 60, l'écrou de réglage 4 permet avantageusement de régler une précontrainte exercée sur les billes 22.

L'actionneur de la figure 1 comporte deux chemins de roulement formés par trois cames 40, 50 et 60 alignées sur l'arbre 30. Bien entendu, il est possible de constituer un actionneur présentant un seul chemin de roulement ou encore un nombre supérieur à deux chemins de roulement. Il suffit de modifier le nombre de cames montées sur l'arbre, chaque chemin de roulement étant formé entre deux cames successives.

L'effort pouvant être fourni par l'actionneur de la figure 1 dépend directement de la précontrainte appliquée aux billes et réglée par l'écrou de réglage 4.

Toutefois, l'effort de précontrainte pouvant être appliqué aux billes 22 reste limité par la pression de Hertz que peuvent subir la surface des cames 40, 50, 60 et la surface intérieure 21 du tube extérieur 20.

Lorsque le moteur 2 de l'actionneur de la figure 1 est en marche, il entraîne en rotation l'arbre 30 et par conséquent les cames 40, 50 et 60 qui sont clavetées sur celui-ci. Les billes 22 roulent alors entre leur chemin de roulement et la surface interne du tube externe. La vitesse tangentielle du centre de chaque bille 22 présente donc deux composantes : une composante tangentielle, perpendiculaire à l'axe de rotation de l'arbre 30 et une composante longitudinale parallèle à l'axe de l'arbre 30 due au pas de l'hélice du chemin de roulement.

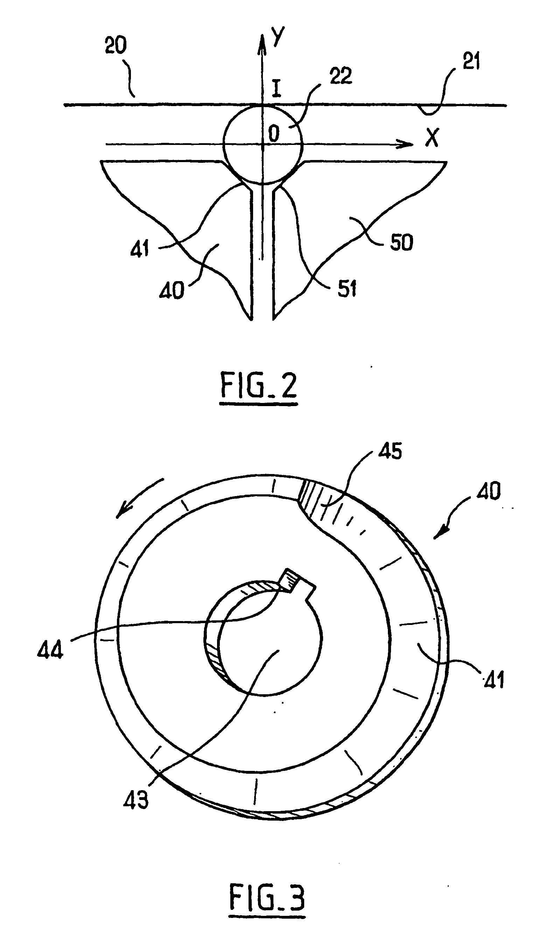

Ainsi que représenté sur la figure 2, une bille 22 tourne autour d'un axe incliné par rapport à l'axe de l'arbre 30 d'un angle équivalent à celui de l'hélice du chemin de roulement. En outre, le point de contact I entre la bille 22 et la surface interne du tube est toujours positionné sur la perpendiculaire à l'axe de rotation passant par le point O. Il en résulte que le tube externe 20 est entraîné en translation à une vitesse proportionnelle à la vitesse de rotation de l'arbre d'entraînement 30 et au pas du chemin hélicoïdal.

L'actionneur linéaire de la figure 1 peut être monté en réalisant les étapes suivantes :
- montage des différents éléments sur l'arbre 30 : cames 60, 50, 40, rondelle 1, roulement 9, entretoises 8 et 12, roulement 7, rondelle 6, rondelles Belleville 5, écrou de réglage 4,
- introduction de l'extrémité de l'arbre 30 supportant les cames 40, 50, 60 dans le tube extérieur 20, les billes 22 étant positionnées dans les chemins de roulement,
- serrage de l'écrou 4 qui entraîne le rapprochement des cames 40, 50, 60 et la précontrainte des billes 22 entre les surfaces des chanfreins et la surface intérieure 21 du tube extérieure 20.

La figure 3 représente un exemple de came 40 utilisé dans le montage de la figure 1. La came 40 présente une forme générale cylindrique. Elle comprend un alésage central 43 destiné à recevoir l'arbre d'entraînement 30, ainsi qu'une rainure de clavette 44 formée à partir de l'alésage 43 et destinée à permettre l'indexage de la came 40 sur l'arbre 30. Un chanfrein hélicoïdal 41 a été réalisé par fraisage d'un bord circulaire de la came 40. Cette came est formée à partir d'une pièce cylindrique de section droite dont l'une des arêtes circulaires est chanfreinée pour former ladite surface de came hélicoïdale inclinée par rapport à l'axe de la pièce cylindrique, les extrémités de la surface hélicoïdale se rejoignant par une surface de décrochement de forme générale conique

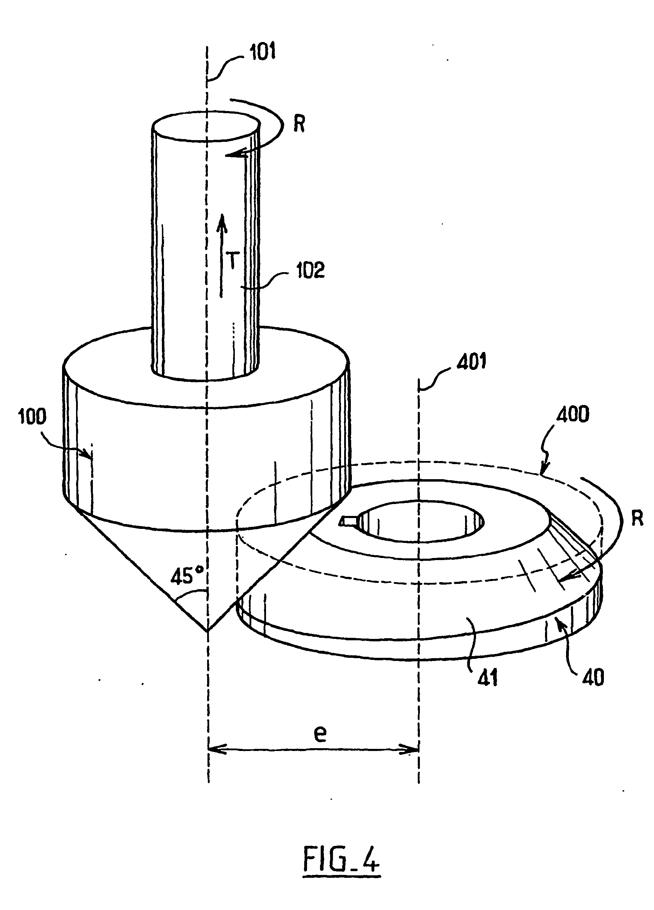

Ainsi qu'illustré sur la figure 4, l'opération de fraisage est réalisée à l'aide d'une fraise conique 100 dont les bords coupants forment un angle de 45 degrés par rapport à son axe de rotation 101. La fraise est montée sur une broche d'usinage tournante 102. Une pièce 400 cylindrique de révolution (représentée en traits pointillés) destinée à former la came 40 est montée sur un plateau tournant. Elle est disposée par rapport à la fraise 100 de sorte que leurs axes 101 et 401 soient parallèles et présentent un écartement e donné. La pièce 400 est animée durant l'opération de fraisage d'un mouvement de rotation par rapport à son axe 401 (ainsi qu'indiqué par la flèche R). Simultanément, la fraise 100 est animée d'un mouvement de translation (indiqué par la flèche T) suivant son axe 101. Le mouvement de translation s'effectue dans un sens suivant lequel la fraise 100 s'éloigne de la pièce cylindrique 400. La pièce 400 effectue une rotation de 360 degrés tandis que la broche 102 se translate d'une distance égale au pas du chanfrein hélicoïdal à générer. Cette opération de fraisage conduit à la génération du chanfrein hélicoïdal 41 orienté à 45 degrés par rapport à l'axe 401.

Des opérations classiques de traitement thermique et de rectification peuvent ensuite être réalisées sur la surface hélicoïdale 41 obtenue (par exemple meulage de la surface hélicoïdale).

Comme on peut le voir sur le figure 3, le chanfrein hélicoïdal de la came 40 forme une surface circonférentielle 41 qui s'élargit lorsqu'on la parcourt dans le sens inverse du fraisage et se raccorde à ses extrémités par un décrochement de forme conique 45. Ce décrochement de forme conique est généré par la forme de la fraise conique lors de sa prise de passe radiale initiale dans la pièce 400.

Bien entendu, des variantes du mode de réalisation précédemment décrit sont envisageables. En particulier, la forme du décrochement peut varier en fonction de la trajectoire de prise de passe initiale de la fraise. Si la fraise conique pénètre dans la pièce 400 selon une prise de passe tangentielle, le décrochement obtenu sera de forme générale plane. Si la fraise conique pénètre dans la pièce 400 selon une prise de passe oblique, le décrochement obtenu sera de forme générale plane à raccordement conique.

Il est également possible d'utiliser une fraise cylindrique dont l'axe de rotation serait incliné par rapport à l'axe de la pièce cylindrique et selon la trajectoire de prise de passe initiale, d'obtenir un décrochement de forme générale cylindrique, plane ou plane à raccordement cylindrique.

En outre, lorsque le pas du chemin de roulement est grand vis à vis du diamètre des cames, la surface de roulement hélicoïdale doit être obtenue par un procédé différent. Par exemple, on peut réaliser une étape préalable de fraisage de la pièce cylindrique à l'aide d'une fraise cylindrique pour obtenir en premier lieu une surface hélicoïdale orientée perpendiculairement à l'axe de la pièce. Puis, on effectue une étape de fraisage du bord de la surface hélicoïdale à l'aide d'une fraise conique pour réaliser un chanfrein hélicoïdal orienté à 45 degrés par rapport à l'axe de la pièce. Le chanfrein hélicoïdal ainsi obtenu forme une surface circonférentielle de largeur constante qui se raccorde à ses extrémités par un décrochement conique.

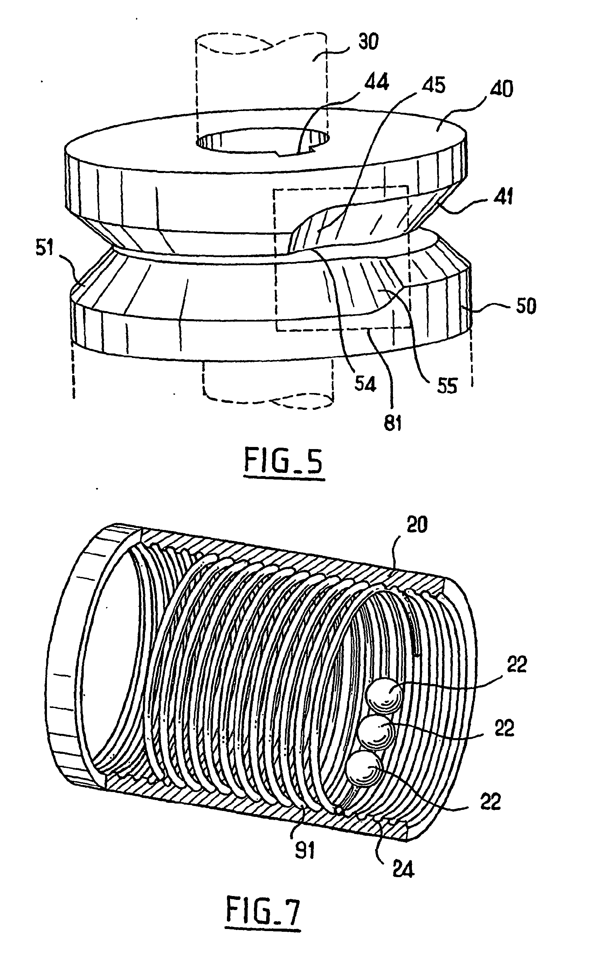

La figure 5 représente le positionnement de deux cames 40 et 50 l'une par rapport à l'autre sur l'arbre d'entraînement 30. Les deux cames 40 et 50 présentent chacune une surface 41, 51 de chanfrein identique. Elles sont positionnées côte à côte sur -l'arbre-d'entraînement 30, de sorte que leurs surfaces 41 et 51 de chanfrein respectives se fassent face pour former un chemin de roulement hélicoïdal pour les billes 22. Les cames 40 et 50 sont chacune indexées sur l'arbre 30 par leur rainure de clavette 44 ou 54. Les rainures de clavette 44 et 54 sont positionnées par rapport à 'l'alésage des cames 40 et 50 de sorte que les surfaces de décrochement coniques 45 et 55 des cames 40 et 50 soient positionnées l'une en face de l'autre, de manière opposée, lorsque celles-ci sont montées sur l'arbre 30.

Les surfaces de décrochement conique 45 et 55 des deux cames 40 et 50 forment avantageusement une zone élargie 81 qui accueille les billes 22 et permet leur re-circulation. Lorsque l'arbre 30 de l'actionneur est entraîné en rotation, les billes 22 roulent sur le chemin de roulement formé par les surfaces de chanfrein 41 et 51. Lorsqu'une bille 22 parvient dans la zone 81 de re-circulation où les deux surfaces de chanfrein 41 et 51 présentent une largeur maximale, elle n'est plus en contact avec la surface intérieure 21 du tube extérieur 20 de sorte qu'elle ne roule plus. La bille 22 reste dans la zone de re-circulation jusqu'à ce qu'elle soit poussée par l'arrivée d'une bille suivante et ainsi réengagée automatiquement dans le chemin de roulement.

Sur la figure 1, l'écrou 70 formé par l'association de cames 40, 50, 60 présente l'avantage de ne pas nécessiter la formation d'un chemin de recirculation interne. Ainsi, dans cette mise en oeuvre de l'invention, les billes 22 sont automatiquement « recyclées » dès qu'elles atteignent la zone de re-circulation 81 joignant les extrémités d'un chemin de roulement.

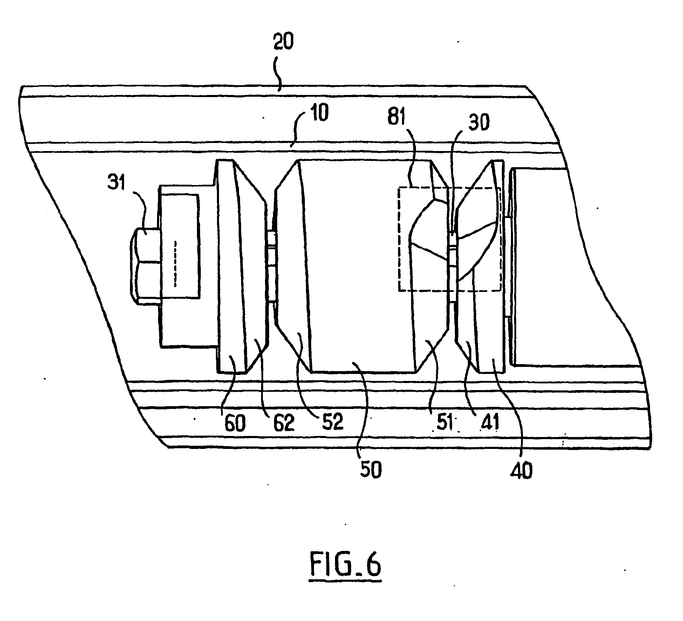

La figure 6 illustre le positionnement des cames 40, 50 et 60 successives les unes par rapport aux autres sur l'arbre d'entraînement 30. Ces cames sont disposées de sorte que les zones de re-circulation des billes ne soient pas alignées. Plus précisément, les cames sont orientées sur l'arbre d'entraînement 30 de sorte que les zones de re-circulation soient réparties angulairement de manière régulière autour de l'axe de l'arbre 30 (axe de rotation et de translation de l'actionneur). Ainsi, sur la figure 6, l'écrou comprenant deux chemin de roulement formé respectivement par les cames 40, 50 et 50, 60, il présente deux zones de re-circulation qui sont disposées à 180 degrés l'une par rapport à l'autre autour de l'axe de l'arbre 30.

Dans le cas d'un écrou comprenant trois chemins de roulement qui présenterait trois zones de re-circulation, les cames seraient orientées de sorte que les zones de re-circulation soient disposées à 120 degrés les unes des autres autour de l'axe de l'arbre 30.

De manière générale, dans le cas d'un écrou comprenant N chemins de roulement (formés par N paires de cames), les cames seraient orientées de sorte que les zones de re-circulation soient disposées à 360/*N* degrés les unes par rapport aux autres autour de l'axe de l'arbre 30.

Cette caractéristique permet d'éviter un mouvement de nutation du tube intérieur 10 par rapport au tube extérieur 20, pouvant se produire lorsque l'actionneur ne comporte qu'une seule paire de cames (c'est à dire un seul chemin de roulement) ou lorsque les zones de re-circulation sont disposées alignées.

Dans une variante de l'actionneur linéaire de la figure 1, les tubes intérieur 10 et extérieur 20 sont formés en matériau relativement légers : par exemple en matériau composite ou en plastique ou encore en alliage léger.

Dans toutes les variantes de l'actionneur revendiquées, des pistes de roulement sont formées sur la surface intérieure 21 du tube extérieur 20. Ces pistes de roulement permettent de réduire la pression de Hertz exercée par les billes 22 sur la surface du tube 20. Les pistes de roulement peuvent être formées par galetage de la surface intérieure 21 du tube 20. Les pistes de roulement peuvent avantageusement être formées par les billes 22 elles-mêmes lors de la rotation de l'arbre 30. Les billes 22 produisent une déformation plastique de la surface 21 en formant des pistes de roulement.

Dans le cas où le tube extérieur 20 est en alliage léger, après avoir formé les pistes de roulement, on applique à la surface 21 du tube 20 un traitement de céramisation destiné à durcir cette surface en profondeur (de 0,1 à 0,2 mm).

La constitution de pistes de roulement permet d'appliquer des efforts de compression que ne supporterait-pas une surface cylindrique lisse. En outre, ces pistes permettent d'augmenter de façon apparente le coefficient de frottement bille/tube extérieur.

Alternativement, les pistes de roulement permettent de ne pas appliquer d'effort de précontrainte trop important sur les billes. Les billes étant guidées par les pistes de roulement, elles ne peuvent glisser par rapport au corps tubulaire extérieur 20.

Ces pistes de roulement présentent un pas hélicoïdal sensiblement égal au pas hélicoïdal du chemin de roulement formé dans l'écrou 70.

Dans cette variante, l'actionneur comprend en combinaison des pistes de roulement sur la surface intérieure 21 du tube extérieur 20 et un écrou 70 présentant des zones de re-circulation sous forme d'espaces élargis. Grâce à cette structure, lorsqu'une bille parvient dans une zone de re-circulation, elle pénètre radialement vers l'intérieur de l'écrou 70 de sorte qu'elle n'est plus en contact avec l'une des pistes formées dans le tube extérieur 20. Ainsi, lorsqu'elle est « recyclée », la bille passe d'une piste de roulement à une piste adjacente par dessus un bord de piste, ce passage d'une piste à l'autre étant possible grâce à l'espace élargi constituant la zone de re-circulation.

Dans une autre variante encore de l'actionneur de la figure 1, les tubes intérieur 10 et extérieur 20 sont également formés en matériau relativement légers. Des pistes de roulement sont formées sur la surface intérieure du tube extérieur 20. Ainsi que représenté sur la figure 7, les pistes de roulement sont constituées par un fil d'acier haute résistance 91 positionné en hélice à l'intérieur du tube extérieur 20. Dans une telle variante, les billes 22 roulent en appui sur deux spires successives du fil 91. Cette variante permet d'obtenir une liaison entre les billes 22 et les pistes du tube 20 mécaniquement positive (il n'y a plus friction mais appui). Les composantes longitudinales des forces d'appui sur les spires du fil 91 sont des appuis positifs. La surface intérieure 21 du tube extérieur 20 comprend une rainure hélicoïdale 24 destinée à recevoir le fil d'acier 91.

Cette variante permet d'utiliser des tubes en aluminium, en KEVLAR©, en fibres de carbone ou en matière plastique moulée, ce qui garantit la légèreté de-la structure d'actionneur final obtenue.

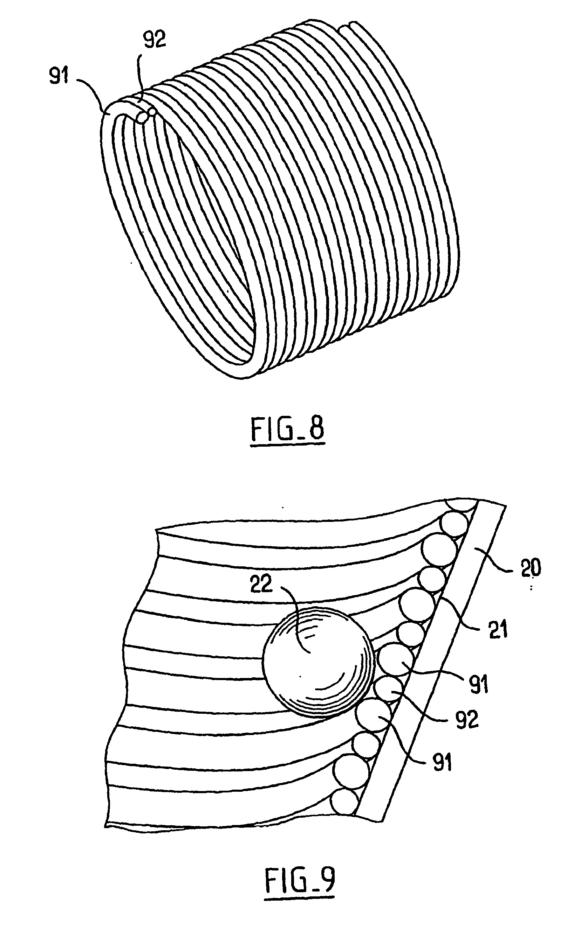

Dans une mise en oeuvre représentée sur les figures 8 et 9, la surface intérieure 21 du tube extérieur 20 est lisse. Des pistes de roulement sont formées sur la surface intérieure du tube extérieur 20. Elles sont constituées par un premier fil d'acier haute résistance 91 positionné en hélice à l'intérieur du tube extérieur 20 et sur lequel les billes 22 viennent en appui. Un deuxième fil intercalaire 92 présentant un diamètre inférieur à celui du premier fil 91 s'étend entre les spires du premier fil. Ce deuxième fil 92 maintient l'écartement entre les spires du premier fil. Il évite en particulier que les spires du premier fil 91 ne s'écartent lors du passage d'une bille 22. De manière préférentielle, les billes 22 ne sont pas en contact avec le fil intermédiaire 92. Cette mise en oeuvre est particulièrement simple et évite d'avoir recours à des techniques d'usinage du tube extérieur 20.

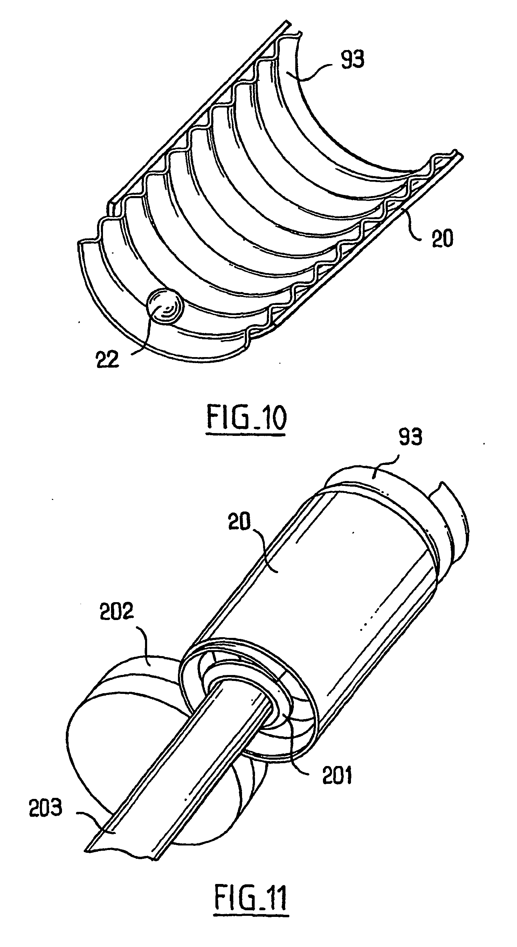

La figure 10 représente une autre variante encore de l'invention dans laquelle des pistes de roulement sont réalisées par déformation plastique dans un tube interne calibré. Le tube interne 93 est disposé dans le tube extérieur 20 et soudé à ce dernier.

Les pistes de roulement dans le tube interne 93 sont réalisées de la manière suivante. On utilise par exemple une machine à galeter ou à former qui comprend un porte-galet muni de trois galets disposés à 120 degrés les uns par rapport aux autres et orientés suivant l'angle d'hélice de la piste à obtenir. Le tube interne 93 est fixé sur un mandrin de forme proche du profil intérieur à obtenir. Le porte-galet est entraîné en rotation. Simultanément, le tube 93 et le mandrin sont entraînés en translation. La vitesse de translation du tube 93 est réglée de sorte que la distance de translation soit égale au pas de l'hélice à chaque tour du porte-galet. L'opération peut se faire en une seule fois et le tube 93 est alors fortement écroui ce qui rend la rigidité et la dureté de la surface de roulement plus grande. Une fois formé, le tube 93 est introduit dans le tube extérieur 20.

La figure 11 représente une étape de soudage du tube interne 93 dans lequel sont formées les pistes de roulement, dans le tube extérieur 20 de l'actionneur. Pour solidariser les deux tubes entre eux, on procède à une série de soudures par point en fond de piste entre les deux tubes. A cet effet, on utilise par exemple une soudeuse par point comprenant une molette intérieure 201 montée sur un arbre 203 et une molette extérieure 202 motorisée. La molette intérieure est inclinée par rapport à l'arbre 203 d'un angle égal à l'angle d'hélice des pistes de roulement. Les soudures sont réalisées au fond des pistes hélicoïdales au contact du tube extérieur 20. L'ensemble ainsi formé est caissonné et la déformation axiale de l'ensemble est négligeable. Cette faible déformation garantit une linéarité de la transformation du mouvement de rotation en mouvement de translation dans l'actionneur final.

Dans le cas où des pistes de roulement sont formées sur la surface intérieure du tube extérieur 20, chaque came 40, 50 ou 60 présente un chanfrein orienté selon un angle inférieur ou égal à 45 degrés par rapport à l'axe 401 de la came, préférentiellement strictement inférieur à 45 degrés et de préférence environ 35 degrés. Cette caractéristique permet de diminuer l'effort radial qui sert d'appui de réaction des forces appliquées à la piste de roulement. En outre, cette caractéristique facilite le passage des billes par dessus les bords des pistes lors de leur re-circulation. En effet, la composante de la force qui permet le passage d'une bille par dessus un bord de piste (formé par exemple par un fil) passe au-dessus du bord de piste.

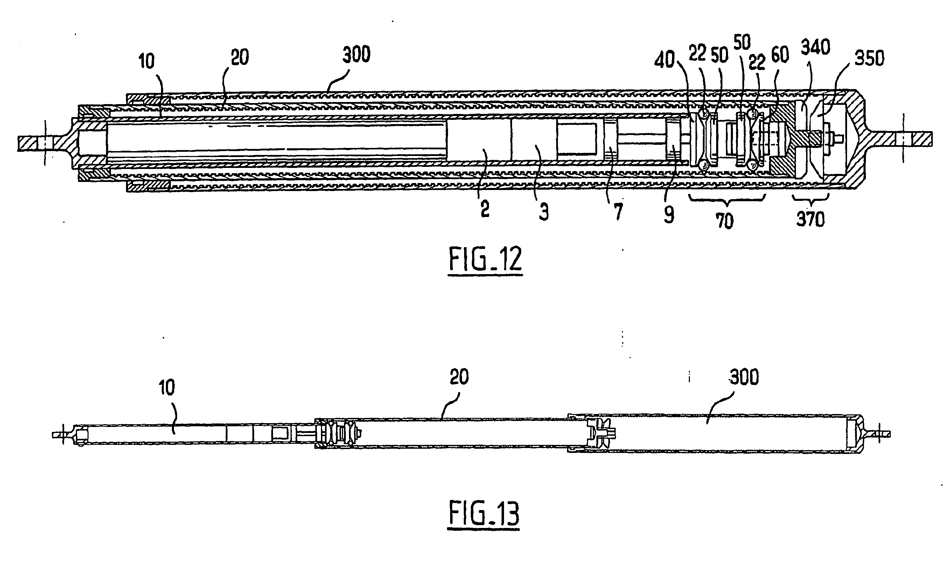

La figure 12 représente un actionneur linéaire de type télescopique. Cet actionneur est similaire à celui de la figure 1. Il comprend un tube intérieur 10 et un tube extérieur 20 dont le diamètre est supérieur au diamètre du tube intérieur 10. Le tube intérieur 10 s'étend en partie dans le tube extérieur 20. Il comprend également un écrou 70 constitué d'une succession de cames 40, 50 et 60 de formes générales cylindriques.

L'actionneur linéaire représenté sur la figure 12 comprend en outre un troisième tube 300 dont le diamètre est supérieur à celui du tube extérieur 20. Le tube extérieur s'étend en partie dans le troisième tube 300. L'écrou 370 est rigidement lié au tube extérieur 20 de sorte que le tube extérieur 20 est apte à entraîner en rotation un écrou 370 comprenant des cames 340 et 350.

Les tubes 10 et 300 sont bloqués en rotation l'un par rapport à l'autre et sont aptes à être entraînés pour coulisser l'un par rapport à l'autre selon leur direction longitudinale. Le tube extérieur 20 est monté flottant, c'est à dire qu'il n'est bloqué en rotation ni avec le tube intérieur 10 ni avec le troisième tube 300.

Lorsque le moteur 2 de l'actionneur de la figure 12 est en marche, il entraîne en rotation l'écrou 70 comprenant les cames 40, 50 et 60. Les billes 22 roulent alors entre leur chemin de roulement et la surface interne du tube intermédiaire 20. Les tubes 10 et 300 étant bloqués en rotation l'un par rapport à l'autre, la rotation de l'écrou 70 entraîne la translation du tube intérieur 10 par rapport à l'ensemble tube extérieur 20 et troisième tube 300. Cette translation est limitée par une butée.

Lorsque les tubes intérieur 10 et extérieur 20 sont en butée l'un par rapport à l'autre, les tubes 10 et 20 sont alors entraînés en rotation simultanément. Le tube extérieur 20 entraîne alors en rotation l'écrou 370 comprenant des cames 340 et 350. Les billes 22 roulent alors entre leur chemin de roulement formé par les cames 340 et 350 et la surface interne du troisième tube 300. Les tubes 10 et 300 étant bloqués en rotation l'un par rapport à l'autre, la rotation de l'écrou 370 entraîne la translation de l'ensemble tube intérieur 10 et tube extérieur 20 par rapport au troisième tube 300.

Il en résulte que l'actionneur télescopique ainsi réalisé se déploie en deux temps. Dans un premier temps, le tube intérieur 10 se translate par rapport aux tube extérieur 20 et troisième tube 300, puis dans un deuxième temps, les tubes intérieur 10 et extérieur 20 se translatent par rapport au troisième tube 300. Ce déploiement en deux temps est dû au fait que le couple nécessaire pour entraîner l'écrou 370 en rotation par rapport au troisième tube est supérieur au couple nécessaire pour entraîner l'écrou 70 en rotation par rapport au tube extérieur.

Le déploiement peut également se faire de manière aléatoire en fonction des couples de frottement apparaissant dans le mécanisme.

Un tel actionneur télescopique présente l'avantage de pouvoir atteindre des longueurs de déploiement plus importantes qu'avec un actionneur simple tel que représenté sur la figure 1.

Dans l'actionneur représenté à la figure 12, l'écrou 70 comprend deux couples de cames et l'écrou 370 comprend un seul couple de cames. Bien entendu, il est possible de réaliser des actionneurs télescopiques présentant un plus grand nombre de tubes et un nombre de cames différents.

La figure 13 représente l'actionneur de la figure 12 en position déployée.

Les tubes 20 et 300 présentent chacun sur leurs surfaces intérieures des pistes de roulement. Ces pistes présentent de préférence le même pas. Ainsi, le déploiement de l'actionneur se fera à vitesse constante. En outre, il sera possible en comptant le nombre de tour du moteur de connaître la position exacte de l'actionneur.

Si les pistes des tubes 20 et 300 présentent des pas différents, alors la vitesse de déploiement de l'actionneur variera selon le tube qui sera en mouvement à un instant donné.

De manière générale, dans un actionneur télescopique comprenant une pluralité de tubes aptes à être entraînés en translation les uns par rapport aux autres, on peut choisir de fixer des pas différents de pistes pour les différents tubes. On obtient ainsi un actionneur télescopique qui se déploie avec des valeurs de coefficient de réduction moteur/mouvement programmables séquentiellement sur la course totale de l'actionneur. Cette caractéristique permet d'adapter l'évolution du couple moteur fourni en fonction du profil de la charge subie par l'actionneur au cours de son déploiement, ce profil étant déterminé par tronçons.

Si l'on souhaite que les tubes se déploient dans un ordre donné, il est possible d'ajouter des moyens de freinage en rotation des tubes les uns par rapport aux autres (par exemple un ou plusieurs joint(s) torique(s) frottant sur le tube) pour que ceux-ci se déploient séquentiellement.

La description qui précède concerne un exemple d'actionneur linéaire dans lequel les moyens d'entraînement de l'écrou comprennent un moteur électrique 2. On comprendra qu'il est bien entendu possible d'utiliser d'autres types de moyens d'entraînement : moteur hydraulique ou autre.

On va maintenant décrire plus en détail le passage d'une bille d'une piste de roulement à l'autre dans le cas d'un actionneur comportant un tube extérieur 20 dont la surface intérieure présente des pistes de roulement.

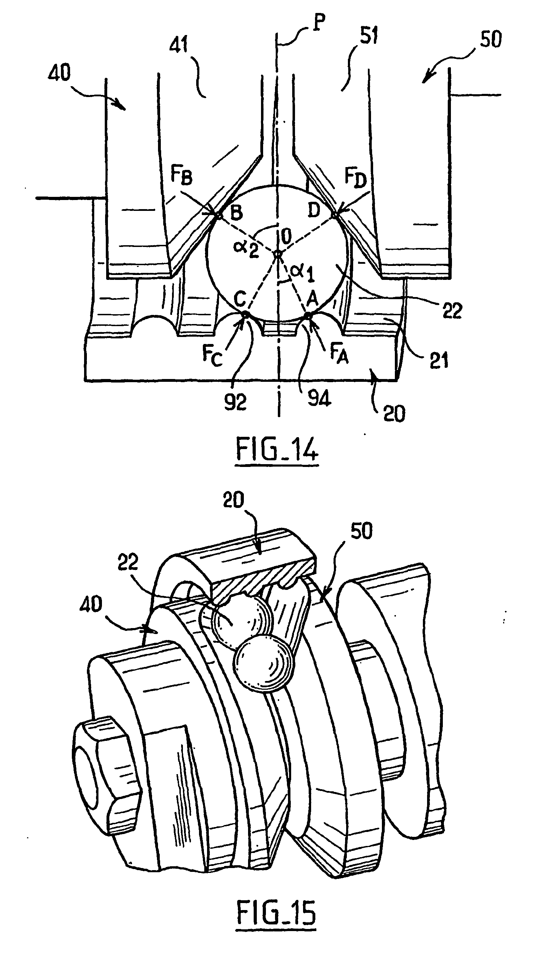

La figure 14 représente une bille 22 de centre O maintenue entre les surfaces de chanfrein 41 et 51 des cames 40 et 50 et une piste de roulement formée par exemple par deux fils 92 et 94. Les points de contact entre la bille 22 et la came 40, la came 50, le fil 92 et le fil 94, sont référencés respectivement B, D, C et A. L'angle entre le plan P de section droite de l'actionneur passant par O et la droite (OA) est noté α₁ et l'angle entre le plan P et la droite (OB) est noté α₂. Les forces exercées sur la bille par les cames et la piste de roulement sont notées F_{A}, F_{B}, F_{C} et F_{D}.

Si α₁ = α₂, on a F_{A}=F_{B}, de sorte que la bille est en équilibre et les forces F_{C} et F_{D} sont nulles.

Si α₁ > α₂, on a F_{A}+F_{B}+F_{C}=0 et la force F_{D} exercée par la came 50 est nulle.

Si α₁ < α₂, on a F_{A}+F_{B}+F_{D}=0 et la force F_{C} exercée par la came 40 est nulle.

Les cames 40 et 50 sont entraînées en rotation de sorte que la bille 22 parvient à une zone élargie de re-circulation ainsi qu'illustré sur la figure 15. A partir de ce moment, la bille 22 n'est plus en contact avec la came 50 de sorte qu'elle ne se trouve plus en équilibre car aucune force ne s'applique en D. La bille 22 est soumise à une force lui donnant une accélération lui permettant de se dégager de la piste de roulement et de franchir le fil 94 pour se positionner sur la piste adjacente.

Le passage de la bille 22 d'une piste à l'autre ne peut se réaliser que si α₁ < α₂ de sorte que la résultante des efforts sur la bille passe au-dessus du fil 94.

En outre, si on tient compte des frottements qui s'exercent sur la bille 22 et que l'on note ϕ₁ et ϕ₂ les angles de frottement entre la bille et le fil 94 et entre la bille et la came 40, une condition pour que le passage de bille d'une piste à l'autre ait lieu est : α₁ + ϕ₁ + ϕ₂ < α₂. En prenant ϕ₁ et ϕ₂ de l'ordre de 5 degrés (contact lubrifié), et α₁ de l'ordre de 35 à 45 degrés, on en déduit que α₂ doit être supérieur à 45 ou 55 degrés.

Pour faciliter le passage de billes d'une piste à l'autre et conserver un bon rendement, on peut choisir α₂ entre 50 et 60 degrés, de préférence 55 degrés. Lorsque α₂ est de l'ordre de 55 degrés, alors la came 40 présente une surface 41 de chanfrein hélicoïdal orientée à 35 degrés par rapport au plan P. Une came présentant un tel chanfrein hélicoïdal peut être obtenue en usinant une pièce cylindrique avec une fraise conique présentant un demi-angle au sommet de 55 degrés.

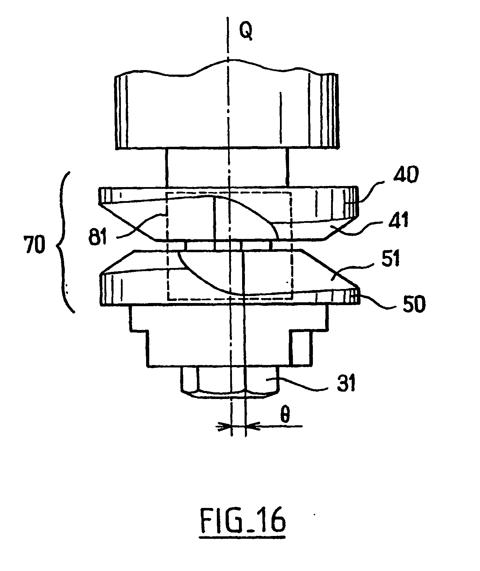

Par ailleurs, la figure 16 représente le positionnement de deux cames 40 et 50 l'une par rapport à l'autre. Le plan Q s'étend transversalement au plan du schéma et passe par l'axe de rotation de l'écrou 70 incluant les deux cames 40 et 50. Les cames 40 et 50 sont identiques. Elles sont disposées l'une en face de l'autre de sorte que les surfaces de roulement 41 et 51 se fassent face. Les cames sont indexées par leurs rainures de clavette (voir figure 5), les rainures de clavette s'étendant dans le plan Q. Comme représenté sur la figure 16, les rainures de clavette sont positionnées de manière à former un angle θ par rapport au repère constitué par une extrémité de la surface hélicoïdale correspondant au plan d'attaque de la fraise.

L'angle θ peut être réglé dans le but de minimiser l'espace d'évolution des billes dans la zone de re-circulation 81 pour éviter la présence de plusieurs billes simultanément dans cette zone et conserver le plus grands nombre possible de billes « travaillantes ». Le réglage de l'angle θ dépend notamment du pas du chemin de roulement, de l'orientation des surfaces de came 41 et 51, du diamètre des billes 22, du diamètre des fils 92 et 94 utilisés pour la réalisation des pistes.

Une manière de déterminer cet angle θ est de déterminer les volumes dans lesquels évolue le centre O d'une bille lorsque celle-ci se trouve respectivement en appui sur l'une des surfaces de came, en appui sur l'autre surface de came et en appui sur les pistes de roulement. L'intersection de ces volumes représente l'espace dans lequel est guidée la bille. Cet espace peut être modifié en faisant varier l'angle θ. L'espace d'intersection doit être à la fois suffisamment étendu pour qu'une bille puisse entrer dans la zone de re-circulation et évoluer dans le chemin de roulement hélicoïdal et suffisamment restreint pour éviter que plusieurs billes ne se trouvent simultanément dans la zone de re-circulation 81. La forme de l'espace obtenu dépend de l'angle θ et également de la forme des surfaces de décrochement des cames.

## Revendications

1. Actionneur comprenant un premier corps tubulaire (20), des moyens d'entrainement (2) comprenant un moteur et destinés à entrainer un écrou (70) positionné à l'intérieur du corps tubulaire (20) et présentant au moins un chemin de roulement (41-51 ; 52-62) comprenant une portion hélicoïdale s'étendant autour de l'écrou (70) selon un angle inférieur à 360° et une portion élargie (81) joignant les extrémités de la portion hélicoïdale, ladite zone élargie (81) constituant une zone de re-circulation de billes (22) disposées entre le chemin de roulement (41-51 ; 52-62) et la surface interne (21) correspondant à ce premier corps tubulaire (20) et comportant des pistes de roulement hélicoïdales pour le guidage desdites billes (22), le moteur étant monté fixe à l'intérieure d'un deuxième corps (10) apte à être entrainé en translation par rapport au premier corps tubulaire (20) et l'écrou (70) comprenant plusieurs éléments (40, 50, 60) alignés, de forme générale cylindrique présentant chacun au moins un chanfrein (41-51; 52-62) formant une surface de came hélicoïdale, les chanfreins (41-51 ; 52-62) formant, deux à deux, des chemins de roulement hélicoïdaux dans lesquels sont positionnées les billes (22).

2. Actionneur selon la revendication 1, **caractérisé par le fait que** les pistes de roulement sur la surface intérieure (21) du premier corps tubulaire (20) présentent un pas hélicoïdal sensiblement égal au pas hélicoïdal d'un chemin de roulement (41-51 ; 52-62) de l'écrou (70).

3. Actionneur selon l'une quelconque des revendications précédentes, **caractérisé en ce que** l'écrou (70) comprend plusieurs chemins de roulement (41-51 ; 52-62), chacun des chemins présentant une zone de re-cirulation des billes et **en ce que** les chemins de roulement sont disposés de sorte que les zones de circulation des billes ne soient pas alignées selon une direction de translation de l'actionneur.

4. Actionneur selon la revendication 3, **caractérisé en ce que** les chemins de roulement (41-51 ; 52-62) sont disposés de sorte que les zones de re-circulation soient réparties angulairement de manière régulière autour de la direction de translation de l'actionneur.

5. Actionneur selon l'une quelconque des revendications précédentes, **caractérisé en ce que** chaque surface de came (41, 51, 52, 62) hélicoïdale forme un décrochement (45, 55) et **en ce que** deux éléments (40, 50, 60) sont positionnés l'un par rapport à l'autre de sorte que leurs décrochements (45, 55) se trouvent l'un en face de l'autre, lesdits décrochements formant la zone de re-circulation (81) des billes (22).

6. Actionneur selon l'une quelconque des revendications précédentes, **caractérisé en ce que** la précontrainte exercée sur les billes (22) est engendrée par serrage des éléments (40, 50, 60) entre eux.

7. Actionneur selon la revendication 6, **caractérisé en ce qu'**il comprend un écrou de réglage (4) des éléments (40, 50, 60) pour régler la précontrainte exercée sur les billes (22).

8. Actionneur selon la revendication 7, **caractérisé en ce qu'**il comprend des moyens élastiques (5) interposés entre l'écrou de réglage (4) et les éléments (40, 50, 60) de l'écrou (70) par l'intermédiaire desquels l'écrou de réglage (4) exerce une précontrainte sur les éléments (40, 50, 60).

9. Actionneur selon l'une des revendications précédentes, **caractérisé par le fait que** chaque élément (40, 50, 60) est formé à partir d'une pièce cylindrique de section droite (400) dont l'une des arêtes circulaires est chanfreinée pour former ladite surface de came hélicoïdale inclinée par rapport à l'axe (401) de la pièce cylindrique (400), les extrémités de la surface hélicoïdale se rejoignant par une surface de décrochement (45) de forme générale conique.

10. Actionneur selon la revendication 9, **caractérisé en ce que** le chemin de roulement (41-51 ; 52-62) comprend une zone élargie (81) de re-circulation des billes (22) définie par les surfaces de décrochement de deux éléments (40, 50), les surfaces de décrochement étant positionnées l'une en face de l'autre de manière opposée.

11. Actionneur selon l'une quelconque des revendications 1 à 10, **caractérisé en ce que** les pistes de roulement au niveau de la surface intérieure (21) du corps tubulaire (20) sont formées par déformation plastique de cette surface intérieure (21) par les billes (22) suivies d'un traitement destiné à durcir cette surface intérieure (21) du corps tubulaire (20).

12. Actionneur selon l'une quelconque des revendications 1 à 10, **caractérisé en ce que** les pistes de roulement au niveau de la surface intérieure (21) du premier corps tubulaire (20) sont formées par au moins un fil (91) positionné en hélice à l'intérieur du premier corps tubulaire (20).

13. Actionneur selon la revendication 12, **caractérisé en ce qu'**il comprend un premier fil (91) positionné en hélice à l'intérieur du premier corps tubulaire (20), sur lequel les billes (22) viennent en appui et un deuxième fil (92) intercalaire présentant un diamètre inférieur à celui du premier fil (91) et s'étendant entre les spires du premier fil (91), ce deuxième fil (92) maintenant l'écartement entre les spires du premier fil (91).

14. Actionneur selon l'une des revendications 1 à 10, **caractérisé en ce qu'**il comprend un tube interne (93) disposé dans le corps tubulaire (20) et soudé à ce dernier, le tube interne (93) présentant les pistes de roulement réalisées par galetage.

15. Actionneur selon l'une des revendications qui précèdent, **caractérisé en ce qu'**il présente un troisième corps tubulaire (300), le premier corps tubulaire (20) étant lié à un deuxième écrou (370), la rotation du deuxième écrou (370) entraînant la translation du troisième corps par rapport au premier corps tubulaire (20), l'actionneur constituant, ainsi, un actionneur de type télescopique.

16. Actionneur selon l'une des revendications qui précèdent, **caractérisé en ce que** le premier corps tubulaire (20) est formé en aluminium, en KEVLAR®, en fibres de carbone ou en matière plastique moulée.

## Claims

1. Actuator including a first tubular body (20), driving means (2) comprising a motor and aimed at driving a nut (70) positioned inside the tubular body (20) and having at least one ball-race (41-51 ; 52-62) comprising a helical portion extending about the nut (70) according to an angle of less than 360° and a widened portion (81) forming a re-circulation zone for the balls (22) arranged between the ball-race (41-51, 52-62) and the inner surface (21) corresponding to this first tubular body (20) and including helical race-tracks for guiding said balls (22), the motor being mounted fixed inside a second body (10) capable of being driven in translation with respect to the first tubular body (20) and the nut (79) comprising several aligned elements (40, 50, 60) having a cylindrical general shape and each having at least one bevel (41-51 ; 52-62) forming a helical cam surface, the bevels (41-51 ; 52-62) forming, two by two, helical ball-races in which the balls (22) are positioned.

2. Actuator according to claim 1, **characterised in that** the race-tracks on the inner surface (21) of the first tubular body (20) have a helical pitch substantially equal to the helical pitch of a ball-race (41-51 ; 52-62) of the nut (70).

3. Actuator according to any of the preceding claims, **characterised in that** the nut (70) comprises several ball-races (41-51 ; 52-62), each of the races has a re-circulation zone for the balls and **in that** the ball-races are so arranged that the re-circulation zones for the balls are not aligned in a direction of translation of the actuator.

4. Actuator according to claim 3, **characterised in that** the ball-races (41-52 ; 52-62) are so arranged that the re-circulation zones are regularly angularly distributed about the direction of translation of the actuator.

5. Actuator according to any of the preceding claims, **characterised in that** each helical cam surface (41, 51, 52, 62) forms a setback (45, 55) and **in that** two elements (40, 50, 60) are so positioned with respect to each other that their setbacks (45, 55) are facing each other, said setbacks forming the re-circulation zone (81) for the balls (22).

6. Actuator according to any of the preceding claims, **characterised in that** the prestressing exerted on the balls (22) is generated by tightening the elements (40, 50, 60) with respect to each other.

7. Actuator according to claim 6, **characterised in that** it includes a nut for adjusting (4) the elements (40, 50, 60), in order to control the prestressing exerted on the balls (22).

8. Actuator according to claim 7, **characterised in that** it includes springy means (5) interposed between the adjusting nut (4) and the elements (40, 50, 60) of the nut (70), through which the adjusting nut (4) exerts a prestressing on the elements (40, 50, 60).

9. Actuator according to any of the preceding claims, **characterised in that** each element (40, 50, 60) is formed from a cylindrical part with a straight cross-section (400) one circular edge of which is bevelled, in order to form said helical cam surface inclined with respect to the axis (401) of the cylindrical part (400), the ends of the helical surface being connected by a setback surface (45) of a conical general shape.

10. Actuator according to claim 9, **characterised in that** the ball-race (41-51 ; 52-62) includes a widened re-circulation zone (81) for the balls (22) defined by the setback surfaces of two elements (40, 50), the setback surfaces being positioned in front of each other, in an opposite way.

11. Actuator according to any of the preceding claims 1 to 10, **characterised in that** the ball-races at the level of the inner surface (21) of the tubular body (20) are formed by plastic deformation of this inner surface (21) by the balls (22), followed by a treatment for hardening this inner surface (21) of the tubular body (20).

12. Actuator according to any of claims 1 to 10, **characterised in that** the ball-races at the level of the inner surface (21) of the first tubular body (20) are formed by at least one wire (91) positioned in the shape of a spiral inside the first tubular body (20).

13. Actuator according to claim 12, **characterised in that** it includes a first wire (91) positioned in the shape of a spiral inside the first tubular body (20), on which the balls (22) rest and a second intercalated wire (92) having a diameter smaller than that of the first wire (91) and extending between the windings of the first wire (91), this second wire (92) maintaining the separation between the windings of the first wire (91).

14. Actuator according to any of claims 1 to 10, **characterised in that** it includes an inner tube (93) arranged in the tubular body (20) and welded to the latter, the inner tube (93) having ball-races carried out by burnishing.

15. Actuator according to any of the preceding claims, **characterised in that** it has a third tubular body (300), the first tubular body (20) being connected to a second nut (370), the rotation of the second nut (370) causing the displacement in translation of the third body with respect to the first tubular body (20), the actuator thus constituting an actuator of the telescopic type.

16. Actuator according to any of the preceding claims, **characterised in that** the first tubular body (20) is made out of aluminium, KEVLAR©, carbon fibres or moulded plastic.

## Patentansprüche

1. Aktuator, umfassend einen ersten röhrenförmigen Körper (20), Antriebsmittel (2), die einen Motor umfassen und dazu bestimmt sind, eine Schraubenmutter (70) anzutreiben, die innerhalb des röhrenförmigen Körpers (20) angeordnet ist, und wenigstens eine Rollbahn (41-51 ; 52-62) aufweist, die einen wendelförmigen Teil umfaßt, der sich um die Schraubenmutter (70) herum nach einem Winkel, der kleiner als 360° ist, erstreckt, und einen erweiterten Teil (81), der die Enden des wendelförmigen Stücks verbindet, wobei die besagte erweiterte Zone (81) eine Zone zum erneuten Umlauf der Kugeln (22) bildet, die zwischen der Rollbahn (41-51 ; 52-62) und der inneren Oberfläche (21) angeordnet sind, entsprechend diesem ersten röhrenförmigen Körper (20) und umfassend wendelförmige Rollspuren für die Führung der Kugeln (22), wobei der Motor fest innerhalb eines zweiten Körpers (10), der geeignet ist, bezüglich des ersten röhrenförmigen Körpers (20) in Translationsbewegung angetrieben zu werden, montiert ist, und die Schraubenmutter (70) mehrere ausgerichtete Elemente (40, 50, 60) mit zylindrischer Allgemeinform umfaßt, die jeweils wenigstens eine Abschrägung (41-51 ; 52-62), die eine wendelförmige Nockenoberfläche bildet, aufweisen, wobei die Abschrägungen (41-51 ; 52-62) paarweise wendelförmige Rollbahnen bilden, in denen die Kugeln (22) positioniert sind.

2. Aktuator nach Anspruch 1, **dadurch gekennzeichnet, daß** die Rollspuren auf der inneren Oberfläche (21) des ersten röhrenförmigen Körpers (20) einen wendelförmigen Schritt aufweisen, der im wesentlichen dem wendelförmigen Schritt einer Rollbahn (41-51; 52-62) der Schraubenmutter (70) entspricht.

3. Aktuator nach irgendeinem der vorgehenden Ansprüche, **dadurch gekennzeichnet, daß** die Schraubenmutter (70) mehrere Rollbahnen (41-51 ; 52-62) umfaßt, wobei jeder der Bahnen eine Zone zum erneuten Umlauf der Kugeln aufweist, und daß die Rollbahnen derart angeordnet sind, daß die Umlaufzonen der Kugeln nicht nach einer Translationsbewegungsrichtung des Aktuators ausgerichtet sind.

4. Aktuator nach Anspruch 3, **dadurch gekennzeichnet, daß** die Rollbahnen (41-51 ; 52-62) derart angeordnet sind, so daß die Zonen zum erneuten Umlauf winklig um die Translationsbewegungsrichtung des Aktuators herum regelmäßig verteilt sind.

5. Aktuator nach irgendeinem der vorgehenden Ansprüche, **dadurch gekennzeichnet, daß** jede wendelförmige Nockenoberfläche (41, 51, 52, 62) einen Absatz (45, 55) bildet, und daß zwei Elemente (40, 50, 60) hinsichtlich einander so positioniert sind, daß ihre Absätze (45, 55) gegenüberliegend sind, wobei die besagten Absätze die Zone zum erneuten Umlauf (81) der Kugeln (22) bilden.

6. Aktuator nach irgendeinem der vorgehenden Ansprüche, **dadurch gekennzeichnet, daß** der auf die Kugeln (22) ausgeübte Vordruck durch das Festklemmen der Elemente (40, 50, 60) untereinander verursacht ist.

7. Aktuator nach Anspruch 6, **dadurch gekennzeichnet, daß** er eine Schraubenmutter zum Einstellen (4) der Elemente (40, 50, 60) umfaßt, um den auf die Kugeln ausgeübten Vordruck (22) zu regeln.

8. Aktuator nach Anspruch 7, **dadurch gekennzeichnet, daß** er elastische Mittel (5) umfaßt, die zwischen der Einstellmutter (4) und den Elementen (40, 50, 60) der Schraubenmutter (70) angeordnet sind, mit deren Hilfe die Einstellmutter (4) einen Vordruck auf die Elemente (40, 50, 60) ausübt.

9. Aktuator nach irgendeinem der vorgehenden Ansprüche, **dadurch gekennzeichnet, daß** jedes Element (40, 50, 60) ab einem zylindrischen Stück mit geradem Querschnitt (400) gebildet ist, von dem die eine von den Kreiskanten abgeschrägt ist, um die besagte wendelförmige Nockenoberfläche zu bilden, die hinsichtlich der Achse (401) des zylindrischen Stückes (400) geneigt ist, wobei die Enden der wendelförmigen Oberfläche sich über eine Oberfläche des Absatzes (45) mit konischer Allgemeinform verbinden.

10. Aktuator nach Anspruch 9, **dadurch gekennzeichnet, daß** die Rollbahn (41-51 ; 52-62) eine erweiterte Zone (81) zum erneuten Umlauf der Kugeln (22) umfaßt, die durch die Absatzoberflächen von zwei Elementen (40, 50) gebildet ist, wobei die Absatzoberflächen gegenüberliegend entgegengesetzt befindlich seien.

11. Aktuator nach irgendeinem der Ansprüche 1 bis 10, **dadurch gekennzeichnet, daß** die Rollspuren im Bereich der inneren Oberfläche (21) des röhrenförmigen Körpers (20) durch plastische Verformung dieser inneren Oberfläche (21) durch die Kugeln (22) gebildet sind, gefolgt von einer Behandlung, vorgesehen, um diese innere Oberfläche (21) des röhrenförmigen Körpers (20) zu härten.

12. Aktuator nach irgendeinem der Ansprüche 1 bis 10, **dadurch gekennzeichnet, daß** die Rollbahnen im Bereich der inneren Oberfläche (21) des ersten röhrenförmigen Körpers (20) durch wenigstens einen Draht (91) gebildet sind, der schraubenförmig innerhalb des ersten röhrenförmigen Körpers (20) angeordnet ist.

13. Aktuator nach Anspruch 12, **dadurch gekennzeichnet, daß** er einen ersten Draht (91), der schraubenförmig innerhalb des ersten röhrenförmigen Körpers (20) angeordnet ist, auf welchem die Kugeln (22) abstützen, und einen zweiten dazwischen liegenden Draht (92), der einen kleineren Durchmesser aufweist als jenen des ersten Drahts (91) und der sich zwischen den Windungen des ersten Drahts (91) erstreckt, umfaßt, wobei dieser zweite Draht (92) den Abstand zwischen den Windungen des ersten Drahts (91) beibehält.

14. Aktuator nach irgendeinem der Ansprüche 1 bis 10, **dadurch gekennzeichnet, daß** er ein inneres Rohr (93) umfaßt, das im röhrenförmigen Körper (20) angeordnet ist und an diesem letzteren geschweißt ist, wobei das innere Rohr (93) die durch Walzenpolieren ausgeführten Rollspuren aufweist.

15. Aktuator nach irgendeinem der vorgehenden Ansprüche, **dadurch gekennzeichnet, daß** er einen dritten röhrenförmigen Körper (300) aufweist, wobei der erste röhrenförmige Körper (20) mit einer zweiten Schraubenmutter (370) verbunden sei, wobei die Drehung der zweiten Schraubenmutter (370) die Translationsbewegung des dritten Körpers hinsichtlich des ersten röhrenförmigen Körpers (20) bewirkt, wobei der Aktuator also einen Aktuator der Art teleskopisch darstellt.

16. Aktuator nach irgendeinem der vorgehenden Ansprüche, **dadurch gekennzeichnet, daß** der erste röhrenförmige Körper (20) aus Aluminium, KEVLAR®, Kohlefasern oder geformten Kunststoff gebildet ist.
